# EUROPEAN PATENT SPECIFICATION

(11) **EP 1 816 789 B1**
(45) Date of publication and mention of the grant of the patent: **08.07.2009**
(21) Application number: 06742028.1
(22) Date of filing: 29.05.2006
(51) Int. Cl.: H04L 29/06, H04L 12/56

(54) **A METHOD AND SYSTEM FOR CONTROLLING THE SELECTION OF THE TRANSMITTING PATH FOR THE MEDIA FLOW IN THE NEXT GENERATION NETWORK**
VERFAHREN UND SYSTEM ZUM STEUERN DER AUSWAHL DES ÜBERTRAGUNGSWEGS FÜR EINEN MEDIENFLUSS IM NETZ DER NÄCHSTEN GENERATION
PROCÉDÉ ET SYSTÈME DE SÉLECTION DU CHEMIN DE TRANSMISSION D'UN FLUX DE MÉDIA DESTINÉ AUX RÉSEAUX DE LA PROCHAINE GÉNÉRATION NETWORK

(30) Priority: 30.07.2005 CN 200510088339
(43) Date of publication of application: 08.08.2007
(73) Proprietor: Huawei Technologies Co., Ltd., Longgang District Shenzhen Guangdong 518129 (CN)
(72) Inventor: LIU, Enhui Huawei Administration Building, Shenzhen Guangdong 518129 (CN)
(74) Representative: Beresford, Keith Denis Lewis
(86) International application number: PCT/CN2006/001140
(87) International publication number: WO 2007/014506

(56) References cited:
- WO-A2-02/37730
- CN-A- 1 373 954
- US-A1- 2003 088 671
- US-A1- 2005 122 904
- "Telecommunication and Internet converged Services and Protocols for Advanced Networking" ETSI STANDARDS, EUROPEAN TELECOMMUNICATIONS STANDARDS INSTITUTE, SOPHIA-ANTIPO, FR, no. v010, May 2005 (2005-05), XP014028858 ISSN: 0000-0001

## Description

### Field of the Technology

The present invention relates to network communication technologies, and particularly, to a system and a method for choosing an outgoing path for a media flow in a Next Generation Network (NGN).

### Background of the Invention

In an NGN network, a service layer is separated from a transport layer. The transport layer is based on packet technologies and optical technologies while the service layer may provide many kinds of multimedia services. Security and Quality of Service (QoS) of a service in an NGN network are the main problems in developing the network services since an NGN network is based on Internet Protocol (IP) packet technologies. In an NGN network, there are many factors affecting network security and QoS. For example, different transport technologies and different transport paths will undoubtedly affect the network security and the QoS.

An operator generally possesses new networks and old networks at the same time in the process of network evolvement and convergence, and thus, there may be multiple transit networks operating at the same time which are physically separated from each other, such as an Asynchronous Transfer Mode (ATM) network, an Internet Protocol Version 4 (IPv4) network, a Multi-protocol Label Switching (MPLS) network and an Internet Protocol Version 6 (IPv6) network, in the core network. The QoS and security guarantee ability of these transit networks are different due to their different transport technologies.

Therefore, various Virtual Private Networks (VPNs), Virtual Local Area Networks (VLANs), MPLS Label Switching Paths (MPLS LSPs) and other tunnel technologies need to be used at the border of a network to aggregate and separate traffics of various types in the core network, so as to improve the QoS of the network and achieve security guarantee.

An edge node of an access network's operator may be connected with multiple core networks of different operators so as to make a subscriber freely choose different core network operators.

So, a requirement on choosing a core network and a path in the core network for a media flow at the border of a network is common. Choosing a core network as well as choosing a path in the core network are to choose an outgoing physical link, a virtual link or a VPN for a media flow. At present, aggregation and path steering of traffics in a core network are generally performed by statically configuring a policy route in a Border Gateway Function (BGF) which may be a Broadband Remote Access Server (BRAS), an Edge Router, a Provider Edge and a Border Router, etc.

However, the static configuration method can support only coarse granularity aggregation and path steering of traffics and cannot support service priority processing, QoS processing or security level processing based on subscriber level and session level of services in an NGN network.

At present, there is also a method in which a bandwidth manager or a path calculating element is used to calculate in real time an edge-to-edge LSP for traffics in an MPLS network. In this method, the calculation is performed mainly according to the QoS requirement of traffics, availability condition as well as usage condition of internal resources in the network, so as to avoid decrease in QoS of the network due to congestion and competition.

The method is limited to an edge-to-edge path choosing in an MPLS network. However, transport technologies at an edge egress of a network and transport technologies of an interconnecting link between domains are diverse.

Therefore, the method above is not applicable in the case that other technologies (such as a physical link separation, various VPNs and VLANs, and various tunnel technologies) are used to perform aggregation and path steering of traffics at an edge egress of a network, and is also not applicable to choose an interconnecting link between different network domains.

From patent publication US 2005/0122904 A1 there is known a method which provides: in response, at least in part, to a request for a service from a system, determining a quality of service to assign to an application to be executed by the system to provide the service, the quality of service being based, at least in part, on one or more service characteristics of the application; and allocating a set of resources to the system to execute the application, the set of resources based, at least in part, on the quality of service.

"Telecommunication and Internet converged Services and Protocols for Advanced Networking" ETSI STANDARDS, TISPAN-05008-NGN, Draft 06TD355, v010, May 2005 (2005-05), XP014028858 defines a release-independent framework and requirements for NGN QoS. In this document, QoS Generic Performance, QoS Framework Model, NGN QoS requirements, QoS Classes, Codecs, QoS Scenarios, QoS Architecture Requirements, Qos Signalling Requirements have been talked about.

### Summary of the Invention

A system and a method for choosing an outgoing path for a media flow in a Next Generation Network (NGN) are provided.

Embodiments of the present invention provide a system for choosing an outgoing path for a media flow in an NGN network, including:
a module set in a Service Control Function, for determining forwarding requirement parameters of a media flow by resolving application layer signalling;
a Policy Decision Function, for determining an Identification, ID, of an outgoing path for the media flow according to the forwarding requirement parameters of the media flow provided by the module, and a policy stored by the Policy Decision Function;
a traffic forwarding control module, for controlling forwarding of the media flow according to the ID of the outgoing path provided by the Policy Decision Function,
and steering the media traffic to the outgoing path, and
the system providing support of service priority processing and QoS processing for the path;
   in which the forwarding requirement parameters of the media flow comprise:
   the ID of the media flow,
   requirements of QoS of the media flow, and
   requirements of priority of the media flow.

The system further includes:
a Resource and Admisssion Control Function, for acquiring the forwarding requirement parameters of the media flow and the ID of the outgoing path, performing a resource admission control processing; and
the Policy Decision Function being arranged for providing the ID of the outgoing path to the traffic forwarding control module if the resource admittance control is passed.

TheService Control Function includes:
a Proxy Call Session Control Function in an Internet Protocol Multimedia Subsystem (IMS) in the NGN network, or a Call Agent device in a Softswitch system in the NGN network, or a Service Control Function having a proxy function in other service systems in the NGN network.

The traffic forwarding control module is set in a Border Gateway Function.

The Policy Decision Function is set in the Service Control Function or the Border Gateway Function, or is set to be an independent device.

The Policy Decision Function is set in an access network.

The module is an application layer signalling resolving module arranged for processing application layer signalling.

The system is arranged for providing processing based on subscriber-level.

Embodiments of the present invention also provide a method for choosing an outgoing path for a media flow in a Next Generation Network, NGN, network, including:
determining forwarding requirement parameters of a media flow in a Service Control Function by resolving application layer signalling;
determining an Identification, ID, of an outgoing path for the media flow according to the forwarding requirement parameters of the media flow provided from the Service Control Function as well as a policy;
controlling, by a traffic forwarding control module, forwarding of the media flow according to the ID of the outgoing path and steering the media flow to the outgoing path, and
the method providing support of service priority processing and QoS processing for the path;
in which the forwarding requirement parameters of the media flow coomprise:
the ID of the media flow,
requirements of QoS of the media flow, and
requirements of priority of the media flow.

The method further includes:
acquiring the forwarding requirement parameters of the media flow and the ID of the outgoing path, performing a resource admission control processing allowing for different transport technologies, and
providing the ID of the outgoing path to the traffic forwarding control module if the resource admission control is passed.

After determining the ID of the outgoing path for the media flow, the method further includes:
performing a resource admission control processing.

The ID of the outgoing path includes:
a physical link identified with a number of a device port, or a Virtual Private Network Routing Forwarding instance (VRF) in a Virtual Private Network (VPN), or a Virtual Local Area Network ID (VLAN ID), a Label of a Label Switching Path of a Multi-protocol Label Switching (MPLS LSP Label), or IDs of tunnels of various encapsulation types.

The determining of forwarding requirement parameters includes processing of application layer signalling.

The method includes subscriber-level processing.

As can be seen from the above technical solutions provided by embodiments of the present invention, control is performed at an edge egress of a network and at an interconnecting link between domains. If a media flow enters an MPLS network forward, the path choosing method in the prior art will be adopted inside the entered MPLS network. Thus, an end-to-end cross-domain path choosing can be implemented.

In embodiments of the present invention, fine granularity choosing of a core network and choosing of a path in the core network based on subscriber level and session level of a service in an NGN network can be implemented through cooperation between an Service Control Function and a Border Gateway Function in the transport layer, so as to improve the QoS and the security guarantee ability of the NGN.

### Brief Description of the Drawings

Fig.1 shows a schematic diagram illustrating an exemplary structure of a system in accordance with an embodiment of the present invention.
Fig.2 shows a schematic diagram illustrating an exemplary flow chart of a method in accordance with an embodiment of the present invention.

### Embodiments of the Invention

In order to make the objective, technical solutions and advantages of embodiments of the present invention clearer, a detailed description of the present invention is hereinafter given with reference to the drawings and detailed embodiments.

Embodiments of the present invention provide a system and a method for choosing an outgoing path for a media flow in an NGN network, and specifically, provide a system and a method for choosing a core network and a path in the core network for a media flow, which can implement a fine granularity choosing of a core network and a fine granularity choosing of a path in the core network based on subscriber level and session level of a service in the NGN. And the two kinds of choosing above can be implemented through cooperation between a Service Control Function (SCF) and a BGF in the transport layer, so as to improve the QoS and the security guarantee ability of the NGN.

The system and method provided by embodiments of the present invention can be combined well with the choosing method of an internal path in an MPLS network in the prior art, and the path choosing method provided by embodiments of the present invention is used to perform the control at an edge egress of a network and at an interconnecting link between domains. If a media flow enters an MPLS network forward, the internal choosing method in the MPLS network will be adopted to perform control inside the entered MPLS network. Thus, an end-to-end cross-domain path choosing can be implemented.

Embodiments of the present invention provide a system and a method for choosing a core network and a path in the core network for a media flow, which can implement a fine granularity choosing of a core network and a fine granularity choosing of a path in the core network based on subscriber level and session level of a service in the NGN. And the two kinds of choosing above can be implemented through cooperation between an SCF and a BGF in the transport layer, so as to improve the QoS and the security guarantee ability of the NGN.

Embodiments of the present invention provide a system and a method for choosing a core network and a path in the core network for a media flow, which chooses a core network and a path in the core network for a media flow based on a policy according to information of priority, QoS, and requirement on security level of a subscriber's session, so as to control the traffic forwarding of the BGF.

The system and method provided by embodiments of the present invention may be integrated into a resource and admission control framework in the NGN as a synthetic solution to a QoS control, a Network Address & Port Translation (NAPT) traversal and a firewall control in the NGN, or may also be applied in the NGN independently.

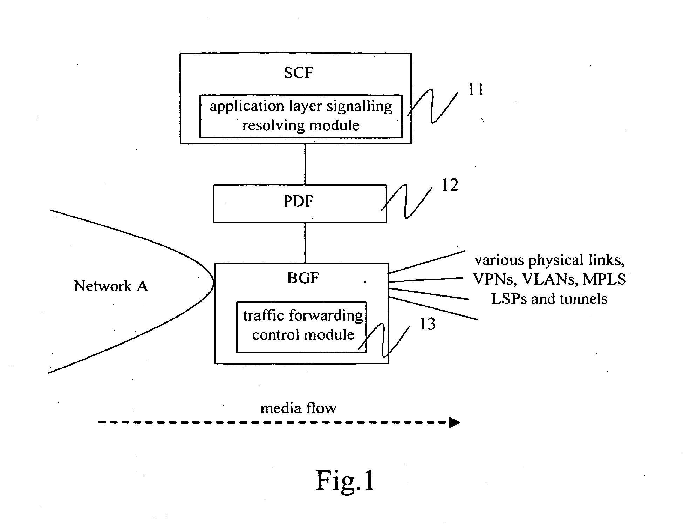

Fig.1 shows a schematic diagram illustrating an exemplary structure of a system in accordance with an embodiment of the present invention. As shown in Fig.1, a system for choosing a core network and a path in the core network for a media flow in an NGN network may specifically include the following modules.
(1) an application layer signalling resolving module is set in an SCF. The application layer signalling resolving module is used for resolving an application layer signalling of a service, so as to determine forwarding requirement parameters of a media flow and provide the determined forwarding requirement parameters to a Policy Decision Function (PDF).
   The SCF is a service control proxy in general, and specifically, may be a Proxy Call Session Control Function (P-CSCF) in an IP Multimedia Subsystem (IMS) in the NGN, or a Call Agent device in a Softswitch system in the NGN.
(2) The PDF is used for determining ID of an outgoing path for a media flow, according to the forwarding requirement parameters of the media flow and policy stored by itself. The PDF also provides the determined ID to a traffic forwarding control module. The PDF may be an independent device, or a functional module integrated into the SCF or a BGF.
(3) The traffic forwarding control module is used for controlling the forwarding of the media flow according to the ID of the outgoing path.

In other words, the traffic forwarding control module is located in a BGF, which may be a BRAS, an Edge Router, a Provider Edge or a Border Router, in the path of the media flow, and is used for choosing an outgoing path for the media flow.

Preferably, the system further includes a resource and admission control function used for acquiring the forwarding requirement parameters of the media flow and the ID of the outgoing path determined by the PDF, performing a corresponding resource admission control processing. And when the resource admission control is passed, the PDF provides the ID of the outgoing path to the traffic forwarding control module.

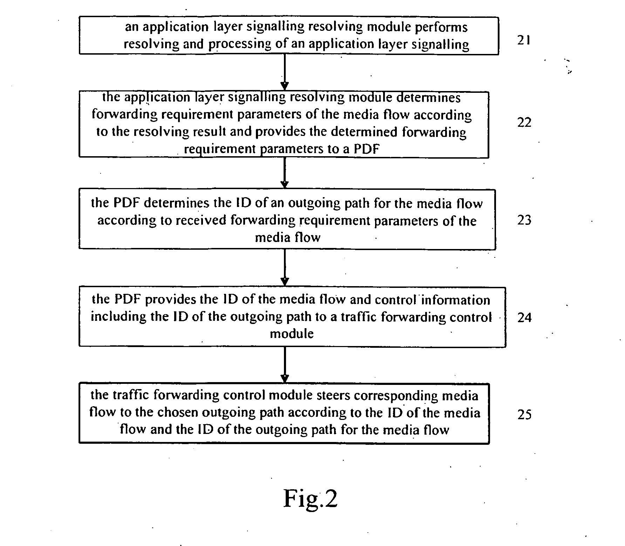

Based on the system shown in Fig. 1, the specific implementation of a method for choosing a core network and a path in the core network for a media flow in an NGN network is shown in Fig.2. And the method specifically includes the following processes.

In block 21: an application layer signalling resolving module in an SCF performs resolving and processing of an application layer signalling.

Embodiments of the present invention do not specifically define contents of the information acquired from the resolving because different applications use different application protocols, such as a Session Initiation Protocol (SIP) / a Session Description Protocol (SDP), an H.323 etc, and information resolved from different protocols is different from each other.

In block 22: the application layer signalling resolving module in the SCF determines forwarding requirement parameters of a media flow, and provides the determined forwarding requirement parameters to a PDF. This process specifically includes: the application layer signalling resolving module in the SCF provides the ID of the media flow, together with the forwarding requirement parameters of the media flow, such as a requirement on QoS, a requirement on service priority and a requirement on security level, to the PDF.

Specifically, the application layer signalling resolving module in the SCF determines forwarding requirement parameters of the media flow according to the application type, the subscriber attribute and the information of the media flow in the application layer signalling.

In block 23: the PDF determines ID of an outgoing path for the media flow based on information of a policy stored by itself, according to the received ID of the media flow and the forwarding requirement parameters of the media flow.

The information of the policy can be established flexibly by the operator according to layout and deployment of a network and thus, will not be described herein.

The ID of the outgoing path may be: a physical link identified with a number of a device port, a VPN Routing Forwarding instance (VRF) in a VPN, a VLAN ID, an MPLS LSP LABEL, or IDs of tunnels of various encapsulation types.

In block 24: the PDF provides the ID of the media flow and control information including the ID of the outgoing path to a traffic forwarding control module in a BGF, so as to control the traffic forwarding of the BGF.

In block 25: the traffic forwarding control module in the BGF performs the traffic forwarding according to the received ID of the media flow and ID of the outgoing path, and steers the media flow to the chosen outgoing path.

In block 23, in the case that there is a Resource and Admission Control Function (RACF) in a forward network with which the outgoing path is connected, the PDF may also provide the received ID of the media flow, the forwarding requirement parameters and the determined ID of the outgoing path together to the RACF in the forward network to perform a resource admission control in the network under the administration of the RACF. Blocks 24 and 25 will not be performed if the resource admission control in the forward network is not passed. And blocks 24 and 25 will be performed when the resource admission control is passed.

To sum up, in embodiments of the present invention, a fine granularity choosing of a core network and a fine granularity choosing of a path in the core network based on subscriber level and session level of a service in the NGN can be implemented. And the two kinds of choosing can be implemented through cooperation between an SCF and a BGF in the transport layer, so as to improve the QoS and the security guarantee ability of the NGN.

The foregoing descriptions are only preferred embodiments of the present invention. The protection scope of the present invention, however, is not limited to the above descriptions. Any change or substitution, within the technical scope disclosed by embodiments of the present invention, easily occurring to those skilled in the art should be covered by the protection scope of the present invention. Therefore, the protection scope of the present invention should be according to the claims.

## Claims

1. A system for choosing an outgoing path for a media flow in a Next Generation Network, NGN, network, **characterized by**
a module set in a Service Control Function, (11) for determining (22) forwarding requirement parameters of a media flow by resolving application layer signalling;
a Policy Decision Function, (12) for determining an Identification, ID, of an outgoing path for the media flow according to the forwarding requirement parameters of the media flow provided by the module, and a policy stored by the Policy Decision Function (23);
a traffic forwarding control module (13) for controlling forwarding of the media flow according to the ID of the outgoing path provided (24) by the Policy Decision Function, and steering the media traffic to the outgoing path (25); and
the system providing support of service priority processing and QoS processing for the path,
wherein the forwarding requirement parameters of the media flow comprise:
the ID of the media flow,
requirements of QoS of the media flow, and
requirements of priority of the media flow

2. The system of Claim 1, comprising:
a Resource and Admission Control Function, for acquiring the forwarding requirement parameters of the media flow and the ID of the outgoing path, performing a resource admission control processing(25); and
the Policy Decision Function being arranged for providing the ID of the outgoing path to the traffic forwarding control module (24) if the resource admission control is passed.

3. The system of Claim 1 or 2, wherein the Service Control Function comprises:
a Proxy Call Session Control Function, in an Internet Protocol Multimedia Subsystem, IMS, in the NGN network, or a Call Agent device in a Softswitch system in the NGN network, or a Service Control Function having a proxy function in other service systems in the NGN network.

4. the system of Claim 1 or 2 wherein the traffic forwarding control module is set in a Border Gateway Function.

5. The system of Claim 1 or 2, wherein the Policy Decision Function is set in the Service Control Function or a Border Gateway Function, or is set to be an independent device.

6. The system of Claim I or 2, wherein the Policy Decision Function is set in an access network.

7. The system of Claim 1, wherein the module is an application layer signalling resolving module arranged for processing application layer signalling.

8. The system of Claim 1, being arranged for providing processing based on subscriber-level.

9. A method for choosing an outgoing path for a media flow in a Next Generation Network, NGN, network, **characterized by**:
determining forwarding requirement parameters of a media flow (22) in a Service Control Function by resolving application layer signalling;
determining an Identification, ID, of an outgoing path for the media flow according to the forwarding requirement parameters of the media flow provided from the Service Control Function as well as a policy (23);
controlling, by a traffic forwarding control module, forwarding of the media flow according to the ID of the outgoing path and steering the media flow to the outgoing path (25); and
the method providing support of service priority processing, and QoS processing for the path,
wherein the forwarding requirement parameters of the media flow comprise:
the ID of the media flow,
requirements of QoS of the media flow, and
requirements of priority of the media flow.

10. The method of Claim 9, comprising
acquiring the forwarding requirement parameters of the media flow and the ID of the outgoing path, performing a resource admission control processing allowing for different transport technologies, and
providing the ID of the outgoing path to the traffic forwarding control module if the resource admittance control is passed.

11. The method of Claim 9, after determining the ID of the outgoing path for the media flow (22), the method comprising:
performing a resource admittance control processing.

12. The method of any one of Claims 9 to Claim 11, wherein the ID of the outgoing path comprises:
a physical link identified with a number of a device port, or a Virtual Private Network Routing Forwarding instance, VRF, in a Virtual Private Network, VPN, or a Virtual Local Area Network ID, VLAN ID, a Label of a Label Switching Path of a Multi-protocol Label Switching, MPLS LSP Label, or IDs of tunnels of various encapsulation types.

13. The method of Claim 9, wherein the determining of forwarding requirement parameters comprises processing of application layer signalling.

14. The method of Claim 9, comprising subscriber-level processing.

15. The system of any one of claims 1 to 8, the system providing support of security level processing for the path and wherein the forwarding requirement parameters of the media flow comprise requirements of security level of the media flow.

16. The method of any one of claims 9 to 14, the method providing support of security level processing for the path and wherein the forwarding requirement parameters of the media flow comprise requirements of security level of the media flow.

## Patentansprüche

1. System zur Auswahl eines Ausgabepfads für einen Medienfluß in einem Next-Generation-Network, NGN, **gekennzeichnet durch**
ein Modulset in einer Servicesteuerfunktion (11) zum Bestimmen (22) von Weiterleitungserfordernisparametern eines Medienflusses **durch** Auflösen von Application-Layer-Signalgebung,
eine Strategieentscheidungsfunktion (12) zum Bestimmen einer Identifikation, ID, eines Ausgabepfads für den Medienfluß gemäß den Weiterleitungserfordernisparametern des Medienflusses, die **durch** das Modul bereitgestellt werden, und einer **durch** die Strategieentscheidungsfunktion (23) gespeicherten Strategie,
ein Verkehrsweiterleitungssteuermodul (13) zum Steuern der Weiterleitung des Medienflusses gemäß der ID des **durch** die Stategieentscheidungsfunktion bereitgestellten (24) Ausgabepfads und zum Lenken des Medienverkehrs zu dem Ausgabepfad (25), und
**dadurch**, daß das System Unterstützung für Serviceprioritätsverarbeitung und QoS-Verarbeitung für den Pfad bereitstellt,
wobei die Weiterleitungserfordernisparameter des Medienflusses aufweisen:
die ID des Medienflusses,
QoS-Erfordernisse des Medienflusses, und
Prioritätserfordernisse des Medienflusses.

2. System nach Anspruch 1, mit
einer Resourcen-und-Zulassungs-Steuerfunktion zum Erhalten der Weiterleitungserfordernisparameter des Medienflusses und der ID des Ausgabepfads und zum Durchführen einer Resourcen-Zulassungs-Steuerverarbeitung (25),
wobei die Strategieentscheidungsfunktion dazu ausgelegt ist, dem Verkehrsweiterleitungs-Steuermodul (24) die ID des Ausgabepfads bereitzustellen, falls die Resourcenzulassungssteuerung passiert wurde.

3. System nach Anspruch 1 oder 2, wobei die Servicesteuerfunktion aufweist:
eine Proxy-Call-Session-Steuerfunktion in einem Intemetprotokoll-Multimediasubsystem, IMS, in dem NGN-Netz oder eine Call-Agent-Vorrichtung in einem Softswitch-System in dem NGN-Netz, oder eine Service-Steuerfunktion mit einer Proxy-Funktion in anderen Servicesystemen in dem NGN-Netz.

4. System nach Anspruch 1 oder 2, wobei das Verkehrsweiterleitungs-Steuermodul in einer Border-Gateway-Funktion eingerichtet ist.

5. System nach Anspruch 1 oder 2, wobei die Strategieentscheidungsfunktion in der Servicesteuerfunktion oder einer Border-Gateway-Funktion, oder als unabhängige Vorrichtung eingerichtet ist.

6. System nach Anspruch 1 oder 2, wobei die Strategieentscheidungsfunktion in einem Access-Network eingerichtet ist.

7. System nach Anspruch 1, wobei das Modul ein Application-Layer-Signalgebungs-Auflösungsmodul ist, das zum Verarbeiten von Application-Layer-Signalgebung eingerichtet ist.

8. System nach Anspruch 1, das dazu ausgelegt ist, auf Subscriber-Level basierende Verarbeitung bereitzustellen.

9. Verfahren zur Auswahl eines Ausgabepfads für einen Medienfluß in einem Next-Generation-Network, NGN, **dadurch gekennzeichnet, daß**
Weiterleitungserfordernisparameter eines Medienflusses (22) in einer Servicesteuerfunktion durch Auflösen von Application-Layer-Signalgebung bestimmt werden,
eine Identifikation, ID, eines Ausgabepfads für den Medienfluß gemäß den Weiterleitungserfordernisparametern des Medienflusses, die durch die Servicesteuerfunktion bereitgestellt werden, und einer Strategie (23) bestimmt werden,
durch ein Verkehrsweiterleitungssteuermodul die Weiterleitung des Medienflusses gemäß der ID des Ausgabepfads gesteuert und der Medienfluß zu dem Ausgabepfad (25) gelenkt wird, und
das Verfahren Unterstützung für Serviceprioritätsverarbeitung und QoS-Verarbeitung für den Pfad bereitstellt,
wobei die Weiterleitungserfordernisparameter des Medienflusses aufweisen:
die ID des Medienflusses,
QoS-Erfordernisse des Medienflusses, und
Prioritätserfordernisse des Medienflusses.

10. Verfahren nach Anspruch 9, wobei
die Weiterleitungserfordernisparameter des Medienflusses und die ID des Ausgabepfads erhalten werden, und eine Resourcen-Zulassungs-Steuerverarbeitung durchgeführt wird, die verschiedene Übertragungstechnologien ermöglicht,
die ID des Ausgabepfads dem Verkehrsweiterleitungs-Steuermodul bereitgestellt wird, falls die Resourcenzulassungssteuerung passiert wurde.

11. Verfahren nach Anspruch 9, wobei nach dem Bestimmen der ID des Ausgabepfads für den Medienfluß (22)
eine Resourcen-Zulassungs-Steuerverarbeitung durchgeführt wird.

12. Verfahren nach einem der Ansprüche 9 bis 11, wobei die ID des Ausgabepfads aufweist:
eine physikalische Verbindung, die durch die Nummer eines Geräte-Ports indentifiziert ist, oder eine Virtual-Private-Network-Routing-Forwarding-Instanz, VRF, in einem Virtual-Private-Network, VPN, oder eine Virtual-Local-Area-Network-ID, VLAN-ID, ein Label eines Label-Switching-Path eines Multi-Protocol-Label-Switching, MPLS-LSP-Labels, oder IDs von Tunneln verschiedener Kapselungstypen.

13. Verfahren nach Anspruch 9, wobei beim Bestimmen der Weiterleitungserfordernisparameter Application-Layer-Signalgebung verarbeitet wird.

14. Verfahren nach Anspruch 9, wobei eine Subscriber-Level-Verarbeitung durchgeführt wird.

15. System nach einem der Ansprüche 1 bis 8, das Unterstützung für eine Sicherheitsniveau-Verarbeitung für den Pfad bereitstellt, wobei die Weiterleitungserfordernisparameter des Medienflusses Erfordernisse des Sicherheitsniveaus des Medienflusses aufweisen.

16. Verfahren nach einem der Ansprüche 9 bis 14, das Unterstützung für eine Sicherheitsniveau-Verarbeitung für den Pfad bereitstellt, wobei die Weiterleitungserfordernisparameter des Medienflusses Erfordernisse des Sicherheitsniveaus des Medienflusses aufweisen.

## Revendications

1. Système destiné à choisir un chemin de sortie pour un flux de contenu dans un réseau de nouvelle génération, NGN pour « *Next Generation Network* », **caractérisé par** :
un module défini dans une fonction de commande de services (11), destiné à déterminer (22) des paramètres d'exigences d'acheminement pour un flux de contenu en résolvant la signalisation de la couche applicative ;
une fonction de décision de politique (12), destinée à déterminer une identification d'un chemin de sortie pour le flux de contenu, en fonction des paramètres d'exigences d'acheminement du flux de contenu fournis par le module et d'une politique stockée par la fonction de décision de politique (23) ;
un module de commande de l'acheminement du trafic (13), destiné à commander l'acheminement du flux de contenu en fonction de l'identification du chemin de sortie fournie (24) par la fonction de décision de politique et à piloter le trafic de contenu vers le chemin de sortie (25) ; et
le système fournissant une assistance pour le traitement de la priorité de service et le traitement de qualité de service sur le chemin ;
dans lequel les paramètres d'exigences d'acheminement du flux de contenu comprennent :
l'identification du flux de contenu ;
des exigences de qualité de service du flux de contenu ; et
des exigences de priorité du flux de contenu.

2. Système selon la revendication 1, comprenant :
une fonction de commande des ressources et de l'accès, destinée à acquérir les paramètres d'exigences d'acheminement du flux de contenu et l'identification du chemin de sortie et à exécuter un traitement de commande de l'accès aux ressources (25) ; et
la fonction de décision de politique étant conçue pour fournir l'identification du chemin de sortie au module de commande de l'acheminement du trafic (24) lorsque la commande de l'accès aux ressources a été passée avec succès.

3. Système selon la revendication 1 ou 2, dans lequel la fonction de commande de services comprend :
une fonction mandataire de commande de session d'appel dans un sous-système multimédia du protocole internet du réseau NGN, ou un dispositif d'agent d'appel dans un système Softswitch du réseau NGN ou une fonction de commande de services ayant une fonction de mandataire dans d'autres systèmes de services du réseau NGN.

4. Système selon la revendication 1 ou 2, dans lequel le module de commande de l'acheminement du trafic est défini dans la fonction de passerelle frontalière.

5. Système selon la revendication 1 ou 2, dans lequel la fonction de décision de politique est définie dans la fonction de commande de services ou dans une fonction de passerelle frontalière, ou est définie sous la forme d'un dispositif indépendant.

6. Système selon la revendication 1 ou 2, dans lequel la fonction de décision de politique est définie dans un réseau d'accès.

7. Système selon la revendication 1, dans lequel le module est un module de résolution de signalisation de la couche applicative, conçu pour traiter la signalisation de la couche applicative.

8. Système selon la revendication 1, conçu pour fournir un traitement sur la base du niveau de l'abonné.

9. Procédé destiné à choisir un chemin de sortie pour un flux de contenu dans un réseau de nouvelle génération, NGN, **caractérisé par** les étapes consistant à :
déterminer des paramètres d'exigences d'acheminement d'un flux de contenu (22) dans une fonction de commande de services en résolvant la signalisation de la couche applicative ;
déterminer une identification d'un chemin de sortie pour le flux de contenu, en fonction des paramètres d'exigences d'acheminement du flux de contenu fournis par la fonction de commande de services et d'une politique (23) ;
commander, par un module de commande de l'acheminement du trafic, l'acheminement du flux de contenu en fonction de l'identification du chemin de sortie et piloter le flux de contenu vers le chemin de sortie (25) ; et
le procédé fournissant une assistance pour le traitement de la priorité de service et le traitement de qualité de service sur le chemin ;
dans lequel les paramètres d'exigences d'acheminement du flux de contenu comprennent :
l'identification du flux de contenu ;
des exigences de qualité de service du flux de contenu ; et
des exigences de priorité du flux de contenu.

10. Procédé selon la revendication 9, comprenant les étapes consistant à :
acquérir les paramètres d'exigences d'acheminement du flux de contenu et l'identification du chemin de sortie et exécuter un traitement de commande de l'accès aux ressources qui permet différentes technologies de transport ; et
fournir l'identification du chemin de sortie au module de commande de l'acheminement du trafic lorsque la commande de l'accès aux ressources a été passée avec succès.

11. Procédé selon la revendication 9, dans lequel le procédé comprend, après la détermination de l'identification du chemin de sortie pour le flux de contenu (22), l'étape consistant à :
exécuter un traitement de commande de l'admission aux ressources.

12. Procédé selon l'une quelconque des revendications 9 à 11, dans lequel l'identification du chemin de sortie comprend :
une liaison physique identifiée par un numéro de port d'un dispositif, ou bien une instance d'acheminement et de routage de réseau virtuel privé, sur un réseau virtuel privé, ou bien une identification de réseau local virtuel, une étiquette d'un chemin à commutation d'étiquettes d'un système à commutation d'étiquettes à protocoles multiples, ou bien des identifications de tunnels avec différents types d'encapsulation.

13. Procédé selon la revendication 9, dans lequel la détermination des paramètres d'exigences d'acheminement comprend le traitement de la signalisation de la couche applicative.

14. Procédé selon la revendication 9, comprenant un traitement du niveau des abonnés.

15. Système selon l'une quelconque des revendications 1 à 8, le système fournissant une assistance pour le traitement du niveau de sécurité sur le chemin et dans lequel les paramètres d'exigences d'acheminement du flux de contenu comprennent des exigences de niveau de sécurité du flux de contenu.

16. Procédé selon l'une quelconque des revendications 9 à 14, le procédé fournissant une assistance pour le traitement du niveau de sécurité sur le chemin et dans lequel les paramètres d'exigences d'acheminement du flux de contenu comprennent des exigences de niveau de sécurité du flux de contenu.
